# EUROPEAN PATENT APPLICATION

(11) **EP 1 176 813 A2**
(43) Date of publication of application: **30.01.2002**
(21) Application number: 01118175.7
(22) Date of filing: 26.07.2001
(51) Int. Cl.: H04N 5/243

(54) **Image sensor**

(30) Priority: 28.07.2000 JP 2000228416
(71) Applicant: MITSUBISHI DENKI KABUSHIKI KAISHA, Tokyo 100-8310 (JP)
(72) Inventor: Okui, Kazunori, c/oMitsubishi Denki K.K., Tokyo 100-8310 (JP); Arima, Yutaka, c/oMitsubishi Denki K.K., Tokyo 100-8310 (JP)
(74) Representative: Popp, Eugen, Dr.

(57) **Abstract**

An image sensor which is capable of producing an output image superior in uniformity by correcting variations in the characteristics of solid state photosensing devices (pixels). Correction utilizes a correlation between a reset signal and sensitivity of the solid state photosensing devices, where the reset signal is produced by driving the solid state photosensing devices in a state in which no light is substantially incident. The solid state photosensing devices convert light into an electric output signal and a gain variable amplifier circuit amplifies the signal with a gain based on the reset signal. Saturation levels of the solid state photosensing devices, gains in the vicinity of the reset level, or both of them are corrected. This process removes the necessity to supply a reference signal of light in the image sensor.

## Description

### BACKGROUND OF THE INVENTION

### 1. Field of the Invention

The present invention relates to an image sensor, and more particularly to an image sensor which is capable of producing an output image superior in uniformity by correcting the variations in the characteristics of solid state photosensing devices.

### 2. Description of the Related Art

An image sensor picks up an image of an object with an array of solid state photosensing devices which are arranged two-dimensionally. While each of the solid state photosensing devices receives light from an object to convert it into an electric signal, the weak signal is amplified in an amplifier circuit. The solid state photosensing devices have some variations in the characteristics, and thus the output signal is not constant even though uniform light is incident on each of the solid state photosensing devices. Amplification of the output signal as it is yields an image which suffers from non-uniformity. Therefore, the variations in the characteristics among the solid state photosensing devices are in need to be corrected in the signal amplifier circuit.

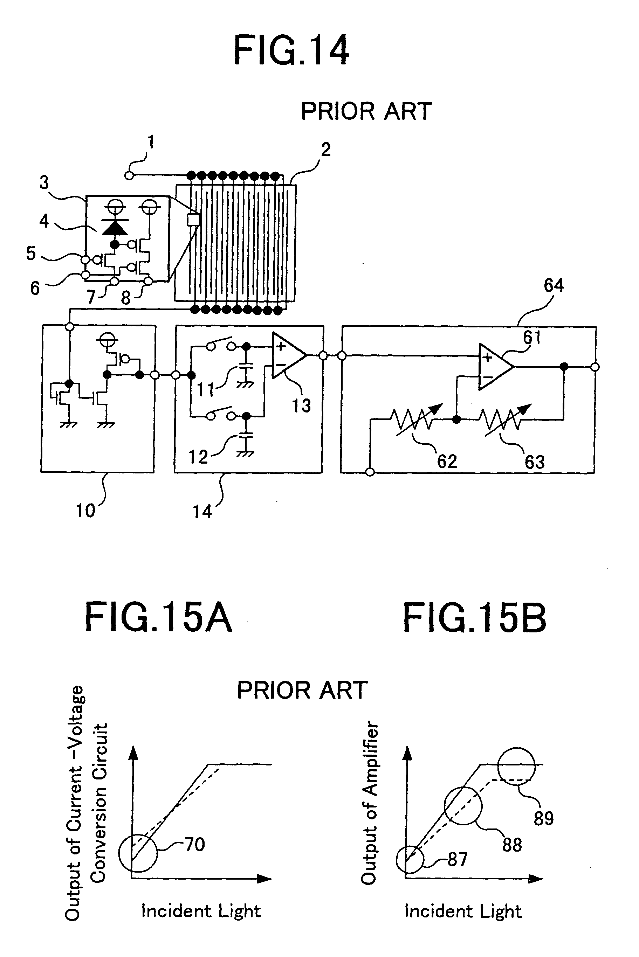

FIG. 14 is a basic block diagram showing an image sensor of the related art. The image sensor comprises basically a reset voltage input terminal 1, an array of solid state photosensing devices 2, a current-voltage converter circuit 10, a differential circuit 14, and a gain variable amplifier circuit 64. The array of solid state photosensing devices 2 is formed by arranging solid state photosensing devices 3 which employ CMOS transistors. Each of the solid state photosensing devices 3, namely a pixel (picture element), comprises a photodiode 4, a reset selection terminal 5, an output selection terminal 6, a reset terminal 7, and an output terminal 8.

The reset terminal 7 is connected to the reset voltage input terminal 1, and the output terminal 8 is connected to the current-voltage converter circuit 10 respectively. The reset voltage input terminal 1 is connected to a reset power supply (not shown). The differential circuit 14, so called CDS (Correlated Double Sampling) circuit, comprises an analogue memory for stored signals 11, an analogue memory for reset signals 12, and a differential amplifier 13. The gain variable amplifier circuit 64 comprises an amplifier 61 and resistances 62 and 63.

The method for correcting the output of an image sensor shown in FIG. 14 will now be described. When a selection signal is fed to the reset selection terminal 5, the photodiode 4 is reset to the potential of the reset terminal 7, that is, to the potential of the reset voltage input terminal 1. Subsequently, a non-selection signal is fed to the reset selection terminal 5, and photoelectric charges are stored in the photodiode 4. Feeding a selection signal to the output selection terminal 6 at this point in time produces an output current corresponding to the photoelectric charges stored in the photodiode 4 at the output terminal 8.

The output current is converted into a voltage signal in the current-voltage conversion circuit 10, and stored as a stored signal in the analogue memory for stored signals 11 of the differential circuit 14. A selection signal is then . fed to the reset selection terminal 5 to reset the photodiode 4 to the potential of the reset terminal 7. Feeding a selection signal to the output selection terminal 6 supplies the output terminal 8 with an output current corresponding to the reset state, in other words, a state where the incidence of light is substantially zero. The output current is converted to a voltage signal in the current-voltage conversion circuit 10, and stored in the analogue memory for reset signals 12 as a reset signal. The differential circuit 14 produces an output of a differential between the stored signal and the reset signal by the differential amplifier 13. The output of the differential is fed to the gain variable amplifier 64 to be amplified.

Referring now to FIGS. 15A and 15B, a state in which variations in the output signals attributable to the difference in characteristics of the solid state photosensing device 3 are corrected will be described. FIG. 15A illustrates the relation between the quantity of light incident on the photodiode 4 and the output of current-voltage conversion circuit 10, and a solid line and a dotted line represent the outputs of two solid state photosensing devices having different characteristics. FIG. 15B represents the relation between the quantity of light incident on the photodiode 4 and the output of the amplifier 64, and a solid line and a dotted line correspond respectively to the outputs of the two solid state photosensing devices having different characteristics shown by the solid line and the dotted line in FIG. 15A.

While the reset levels, namely, the outputs of the solid state photosensing devices 3 produced in a state in which the quantity of light incident on the photodiode 4 is substantially zero, differ in height from one solid state photosensing device to another as shown by the numeral 70 of FIG.15A, the reset levels are in agreement with each other in the outputs of the gain variable amplifier 64 as shown by the numeral 87. However, the gains and the saturation levels, as shown by the numerals 88 and 89, differ from one solid state photosensing device to another.

As a method for correcting variations in the characteristics of the solid state photosensing device, Japanese Patent Laid-Open No.161777(1981), for example, discloses a method of storing the output signals of each solid state photosensing device for the two levels of reference signals of light (a black level and a white level) and correcting variations of each picture element in sensitivity by using the stored output signals. It should be noted that this method requires supplying two levels of reference signals of light and the saturation levels differ in height from one solid state photosensing device from another even though the correction is performed.

### SUMMARY OF THE INVENTION

It is an object of the present invention to provide an image sensor which can correct the difference in saturation level, or difference in gain near the reset level, or both, without giving a reference signal of light to solid state photosensing devices.

The image sensor according to the present invention comprises a image sensing portion having a plurality of solid state photosensing devices for converting light into an electric signal, drive potential supply means for supplying the drive potential of the solid state photosensing devices, amplifying means for receiving the electric signal and amplifying the electric signal with a variable gain, and controlling means for controlling the gain. The amplifying means changes the gain according to a reset signal which is produced by the solid state photosensing device in a state where no light is substantially incident. Then, saturation level or the gain near the reset level are corrected without giving a reference signal of light to the solid state photosensing devices.

### BRIEF DESCRIPTION OF THE DRAWINGS

FIG. 1 is a block diagram of an image sensor according to a First Preferred Embodiment of the present invention;
FIGS. 2A ,2B and 2C are drawings showing states in which variations in the reset signals attributable to the difference of the characteristics of the solid state photosensing devices according to the present invention are corrected;
FIG. 3 is a block diagram of an image sensor according to a Second Preferred Embodiment of the present invention;
FIG. 4 is a block diagram of an image sensor according to a Third Preferred Embodiment of the present invention;
FIG. 5 is a drawing showing a structure of the variable voltage generation circuit according to the present invention;
FIG. 6 is a block diagram of an image sensor according to a Fourth Preferred Embodiment of the present invention;
FIG. 7 is a block diagram of an image sensor according to a Fifth Preferred Embodiment of the present invention;
FIG. 8 is a block diagram of an image sensor according to a Sixth Preferred Embodiment of the present invention;
FIG. 9 is a drawing showing the input/output characteristics of the non-linear circuit according to the Sixth Preferred Embodiment;
FIGS. 10A and 10B are drawings showing a state in which variations in the reset signals attributable to the difference of the characteristics of the solid state photosensing devices according to the Sixth Preferred Embodiment are corrected;
FIG. 11a and 11b are block diagrams of image sensors according to a Seventh Preferred Embodiment of the present invention;
FIG. 12 is a block diagram of an image sensor according to an Eighth Preferred Embodiment of the present invention;
FIG. 13 is a block diagram of an image sensor according to a Ninth Preferred Embodiment of the present invention;
FIG. 14 is a drawing showing a structure of an image sensor in the related art; and
FIGS. 15A and 15B are drawings showing a state in which variations in the reset signals of an image sensor of the related art are corrected.

### DESCRIPTION OF THE PREFERRED EMBODIMENTS

The image sensors according to the present invention are used for those of a digital camera, a monitor camera, etc. An image of an object is obtained by reading out and amplifying the output signals of each of solid state photosensing devices, which constitute pixels (picture elements) of the image sensor. The solid state photosensing devices exhibit some variations in the characteristics and then were examined to know the relation between the quantity of light incident and the output signal thereof in detail. The variations in the characteristics were found to have a certain trend, for example as shown in FIG. 15A, that the higher the level of the reset signal is, the lower the sensitivity to light is.

The present invention utilizes the correlation between the reset signal and the sensitivity. In other words, the amplifying means changes its gain based on the level of reset signals. Therefore, the saturation level of the solid state photosensing devices, the gain in the vicinity of the reset level, or both of them can be corrected. This process removes the necessity to supply the reference signal of light in the image sensor.

While solid state photosensing devices generally exhibit the linear relation between the output signal and the quantity of incident light, a photosensing device with a non-linear relation may also be applied to the present invention. As one of the linear photosensing devices, there is a CMOS type linear image pickup device of AMI (Amplified MOS Imager). The CCD (Charge Coupled Device) may also be applied to. A non-linear device includes a CMOS area solid state photosensing device of logarithmic conversion type, for example. While linear photosensing devices produce output signals normally with a range of three orders or the like in magnitude of light, non-linear devices produce output signals of an image with a range of six orders or the like in magnitude of light. The characteristics of the CMOS area solid state photosensing device of logarithmic conversion type are described specifically in "Video Information Media Institute Publication", Vol.54, No.2 (2000), pp224-228.

The present invention is not limited by the number of the pixels. Various types of arrays with arrangement ranging from 32 columns x 32 rows to the recent 640 columns x 640 rows are produced, and the present invention can be applied to any one of these arrays, irrespective of the size or the number of solid state photosensing devices.

The reset drive is generally carried out every time the image sensor reads out the output signal of the solid state photosensing devices. The image sensor may store the levels of reset signals into the memory, after performing the reset drive once. When reading out the output of the solid state photosensing devices from the second time on, the stored levels of the reset signals are read out for setting the gain.

Referring now to the drawings, the image sensor according to the present invention will be described in detail. The present invention is not limited by the description as a matter of course.

### First Preferred Embodiment

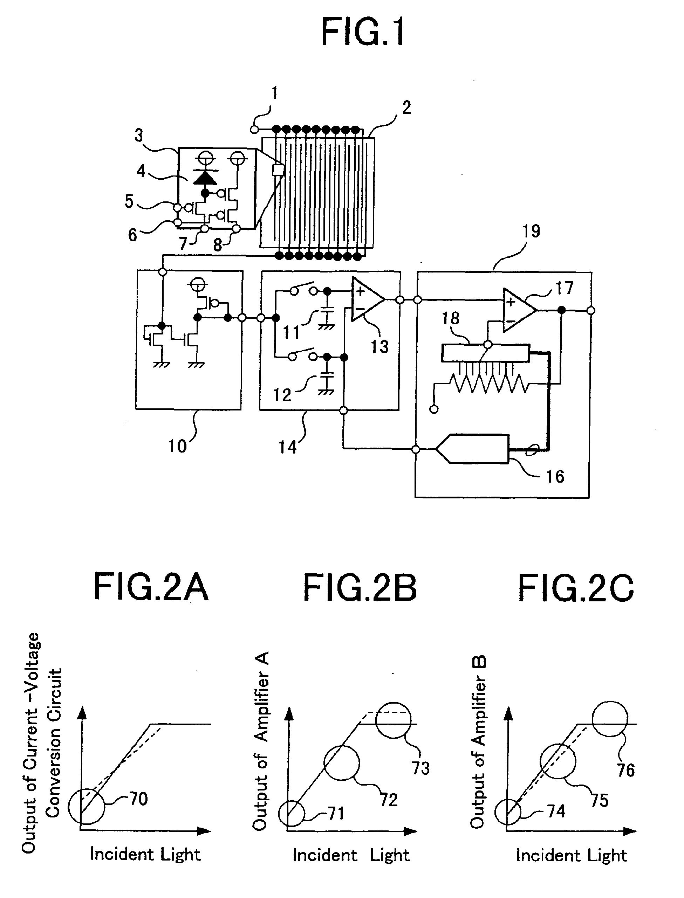

In FIG. 1, the numeral 1 designates a voltage input terminal, the numeral 2 designates a solid state photosensing device array, the numeral 3 designates a solid state photosensing device, the numeral 10 designates a current voltage conversion circuit, the numeral 14 designates a differential circuit, and the numeral 19 designates a gain variable amplifier circuit. Each solid state photosensing device 3 comprises a photodiode 4, a reset selection terminal 5, an output selection terminal 6, a reset terminal 7, and an output terminal 8. The reset terminal 7 is connected to the reset voltage input terminal 1 which is connected to the reset power supply (not shown), and the output terminal 8 is connected to the current-voltage conversion circuit 10. The differential circuit 14 is a CDS (Correlated Double Sampling) circuit for obtaining the differential of output signals and comprises an analogue memory for stored signals 11, an analogue memory for reset signals 12, and the differential amplifier 13. The gain variable amplifier circuit 19 comprises an analogue-digital conversion circuit 16, an analogue amplifier 17, and a selector 18 for determining the ratio of feedback resistances and connected to the analogue amplifier 17. The analogue memory for the reset signal 12 and the analogue-digital conversion circuit 16 are connected to control the gain of the gain variable amplifier circuit 19.

The action of the image sensor thus constructed will now be described. When a selection signal in fed to the reset selection terminal 5, the photodiode 4 is reset to the potential of the reset terminal 7. Feeding a non-selection signal to the reset selection terminal 5 makes photoelectric charges to be stored in the photodiode 4. Then feeding a selection signal to the output selection terminal 6 produces an output current on the output terminal 8 corresponding to the photoelectric charges stored in the photodiode 4. Further, the output current is converted into a voltage signal in the current-voltage conversion circuit 10, and stored in the analogue memory for stored signals 11 of the differential circuit 14 as a stored signal.

Then, a selection signal is fed to the reset selection terminal 5 to reset the photodiode 4 again to the potential of the rest terminal 7. When a selecting signal is fed to the output selection terminal 6, the output terminal 8 produces an output current corresponding to the reset state, in other words, the state in which the incident light is substantially zero. The output current is converted into a voltage signal in the current-voltage conversion circuit 10, and stored in the analogue memory for reset signals 12 as a reset signal. These actions specify reset drive.

The stored reset signal is converted into a digital signal in the analogue-digital conversion circuit 16 to determine the ratio of feedback resistances of the selector 18, which determines the gain of the gain variable amplifier circuit 19. The differential circuit 14 produces an output of differential by subtracting the reset signal from the stored signal with the differential amplifier 13. The output of differential is amplified at the analogue amplifier 17 and the gain thereof is determined corresponding to the reset signal. The reset level (offset) of the analogue amplifier 17 is adjusted according to the user's preference.

A description will be given on how variations in the output signals attributable to the difference of the characteristics of the solid state photosensing device is corrected referring to FIG. 2A, 2B and 2C. FIG. 2A is a graph showing the relation between the quantity of light incident on the photodiode 4 and the output of the amplifier circuit, wherein a solid line and a dotted line represent the outputs of the two solid state photosensing devices having different characteristics. FIG. 2B and FIG. 2C are graphs showing the quantity of light incident on the photodiode 4 and the output of the amplifier circuit, wherein a solid line and a doted line represent the output of two solid state photosensing devices having different characteristics respectively shown in FIG. 2A.

There are two methods of determining the ratio of feedback resistances of the selector 18. The first method gives priority to an agreement of the gain. According to first method, while one solid state photosensing device and another solid state photosensing device are different in the reset level and the gain, as shown by the numeral 70 of FIG. 2A, both devices make an agreement with each other in the gain as shown by the numeral 72 of FIG. 2B. In this case, while the reset levels agree with each other as shown by the numeral 71, the saturation levels differ as shown by the numeral 73. Disagreement in the saturation level will make some blurs on color images.

The second method gives priority to an agreement of the saturation level. According to second method, while one solid state photosensing device and another solid state photosensing device agree with each other in the saturation level, both devices differ in the gain as shown by the numeral 75. In contrast, the reset levels agree with each other as shown by the numeral 74. Which method to choose is a matter of selection of users. If elimination of blurring on color images that occurs on incidence of strong light is desired, the second method is preferable.

As is described thus far, since the image sensor according to this Embodiment determines the gain of the gain variable amplifier circuit 19 based on the reset signal, the variations attributable to the difference in the characteristics of the solid state photosensing devices can be corrected easily.

### Second Preferred Embodiment

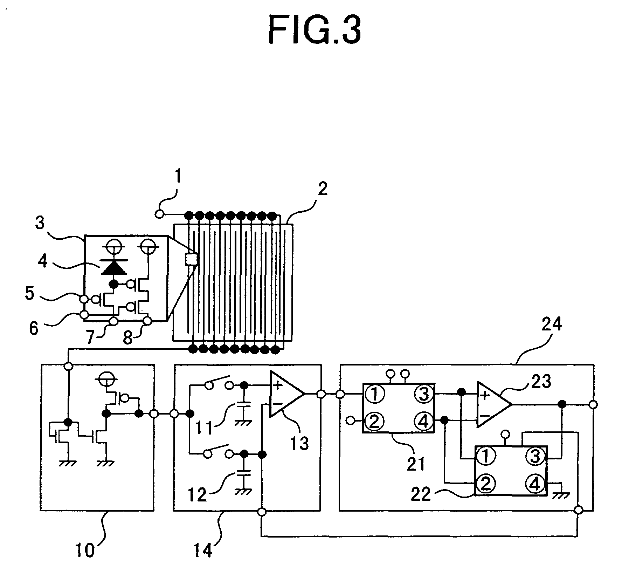

In FIG. 3, the numerals 21 and 22 designate SEMI CONDUCTIVE MOS RESISTANCE NETWORK (hereinafter referred to as MRN) disclosed in the publication of United States Patent Publication No.4,710,726, the numeral 23 designates an analogue amplifier, and the numeral 24 is a gain variable amplifier circuit constituted by the use of the MRN. The characteristics of gain variable amplifier circuit 24 are described, for example, in *"Analog MOS Electronic Circuits* (Shokodo, ISBN4-7856-1198-7)" pp157-158, by Sigetaka Takagi.

The solid state photosensing device 3 produces an output current corresponding to the photoelectric charges stored in the photodiode 4. The output current is converted into voltage signal in the current-voltage conversion circuit 10, and stored in the signal analogue memory 11 of the differential circuit 4 as a stored signal. Then, the reset drive is performed to store the reset signal into the analogue memory for reset signals 12, which are connected to the MRN 22 to control the gain of the gain variable amplifier circuit 24. In the gain variable amplifier circuit 24 utilizing the MRNs 21, 22, the magnitude of the reset signal changes the gain thereof.

The gain variable amplifier circuit 24 is a circuit suitable for giving priority to an agreement of the saturation level. In other words, as shown by the numeral 76 in FIG. 2C, the saturation levels for both of the solid state photosensing devices agree with each other. In this case, while the reset levels agree with each other as shown by the numeral 74, the gains are different in each of the devices as shown by the numeral 75.

### Third Preferred Embodiment

The First and Second Preferred Embodiments perform the reset drive with one level of drive voltage. Now, an example of performing the reset drive at two levels is described below.

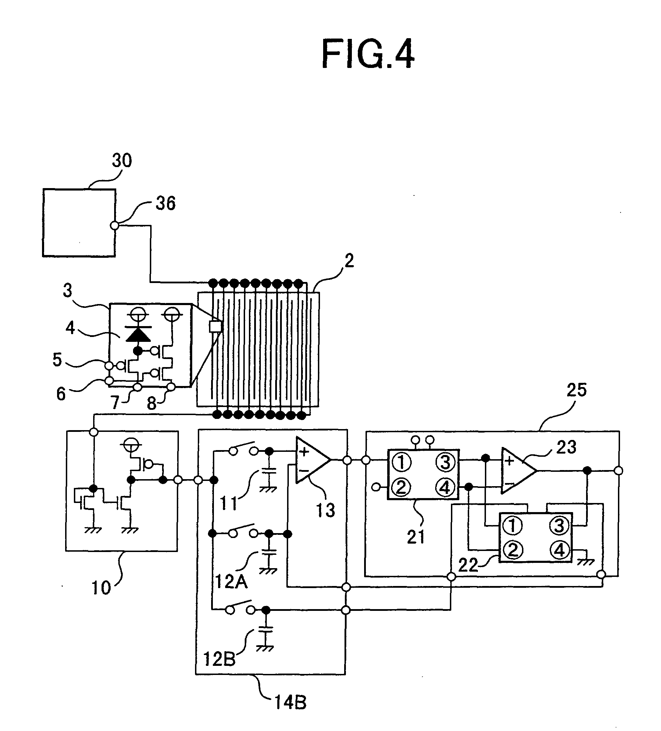

In FIG. 4, the numeral 14B designates a differential circuit B, the numeral 25 designates a gain variable amplifier circuit, and the numeral 30 designates a variable voltage generation circuit. The differential circuit B comprises an analogue memory for stored signals 11, a first analog memory for reset signals 12A, a second analogue memory for reset signals 12B, and a differential amplifier 13.

The gain variable amplifier circuit 25 comprises MRNs 21, 22, and an analogue amplifier 23, and differs from the gain variable amplifier circuit 24 in that the level of the second analog memory for reset signals 12B is stored in the MRN 22. The first and second analog memories for reset signals 12A and 12B and the MRN 22 are connected to control the gain of the gain variable amplifier circuit 25.

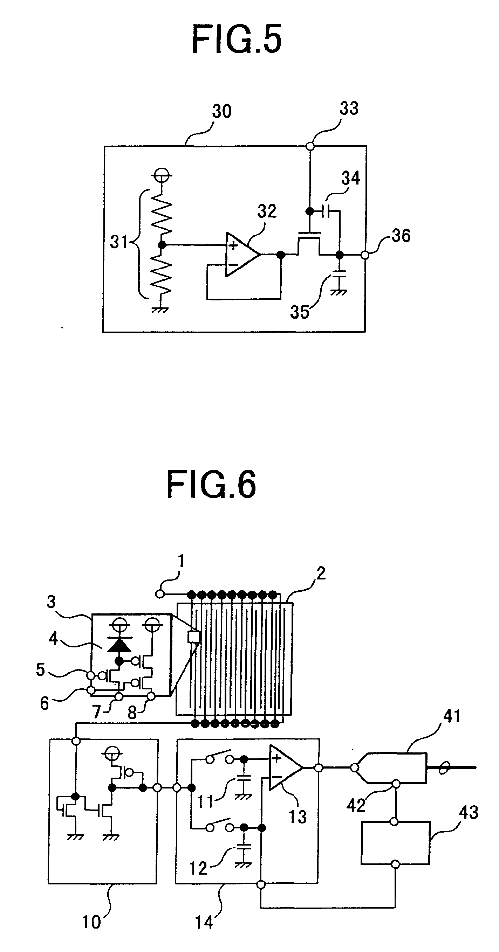

An example of the construction of the variable voltage generation circuit 30 is shown in FIG. 5. In FIG. 5, the numeral 31 designates a ladder resistance, the numeral 32 designates an analogue amplifier, the numeral 33 designates a select terminal for changing the voltage, the numeral 34 designates a coupling capacity A, the numeral 35 designates a coupling capacity B, and the numeral 36 designates an output terminal.

The actions of the variable voltage generation circuit 30 will now be described. An output voltage determined by the division ratio of the ladder resistances 31 is buffered (to store information temporarily) at the analogue amplifier 32. Turning on the select terminal for changing the voltage 33 produces an output voltage determined by the division ratio of the ladder resistances (a first reset voltage) on the output terminal 36. Turning off the select terminal for changing voltage 33 produces another output voltage lowered by the potential determined by the coupling capacity A (34) and the coupling capacity B (35) (a second reset voltage) on the output terminal 36. In other words, the variable voltage generation circuit 30 supplies the first reset voltage or the second reset voltage depending on TURN ON or TURN OFF of the select terminal for changing the voltage 33.

The solid state photosensing device 3 produces an output current corresponding to the electric charges stored in the photodiode 4. The output current is converted into a voltage signal at the current-voltage converting circuit 10 and stored in the analogue memory for stored signals 11 of the differential circuit 14B as a stored signal. Then, the photodiode 4 is reset-driven at a first reset voltage determined by the variable voltage generation circuit 30, and the reset signal at that time (a first reset signal) is stored in the analogue memory for the first reset signals 12A. Then the photodiode 4 is reset-driven at a second reset voltage determined by the variable voltage generation circuit 30, and the reset signal at that time (a second reset signal) is stored in the analogue memory for the second reset signals 12B.

Both of the first reset signal and the second reset signal are fed to the MRN 22. The gain of the gain variable amplifier circuit 25 is determined by the difference between the first reset signal and the second reset signal. In the gain variable amplifier circuit 25, correction is carried out by giving priority to an agreement of the gain. In other words, as shown by the numeral 72 of FIG. 2B, the solid state photosensing devices agree in gain approximately. In addition, the correction based on two reset signals is superior in the agreement of the gain to the correction in one step shown in the First and Second Preferred Embodiments.

As is described thus far, since the image sensor of the Third Preferred Embodiment performs the reset drive in two levels to generate two reset signals and determines the gain with reference to the two reset signals, the variations of the sensitivity attributable to the difference of the characteristics of the solid state photosensing devices are corrected more precisely. Though an example shows here a case where the reset drive is performed in two levels, the number of levels to perform the reset drive is not limited to the one or two. The more levels to perform the reset drive is, the more precise the correction would be, but the more complex the construction of the variable voltage generation circuit 30. Therefore, it is necessary to select the appropriate numbers for the reset drive considering the increase of cost. Under normal conditions, performing the reset drive at one or two level(s) supplies the correction with sufficient accuracy at a reasonable cost.

### Fourth Preferred Embodiment

An example of the image sensor producing the output in digital format will now be illustrated. In FIG. 6, the numeral 41 designates an analogue-digital conversion circuit for converting an analogue signal into a digital signal, the numeral 42 designates a reference voltage input terminal of the analog-digital conversion circuit 41, and the numeral 43 designates a voltage conversion circuit.

The analogue memory for reset signals 12 and the voltage conversion circuit 43 are connected to control the gain of the analogue-digital conversion circuit 41. In the analogue-digital conversion circuit 41, the reference range, in other words, the difference between the output of the highest level and that of the lowest level, varies in accordance with a reference voltage fed to the reference voltage input terminal 42. This means that the gain of the analogue-digital conversion circuit 41 changes substantially. When the signal level of the analogue memory for stored signals 11 is equal to that of the analogue memory for reset signals 12, the voltage conversion circuit 43 produces an output of zero as a reference voltage and thus the zero level of the analogue-digital conversion circuit 41 is established.

The solid state photosensing device 3 produces an output current corresponding to the electric charges stored in the photodiode 4. The output current is converted into a voltage signal in the current-voltage conversion circuit 10 and stored in the analogue memory for stored signals 11 of the differential circuit 14 as a stored signal. Then the reset drive is performed to store the reset signal in the analogue memory for reset signals 12. The output voltage of the reset signal is controlled in the voltage conversion circuit 43 to be a reference voltage of the analogue-digital conversion circuit 41. The output of the analogue-digital conversion circuit 41 has characteristics as those shown in FIG. 2C. In other words, the solid state photosensing devices are corrected to make an agreement with each other in the saturation level.

Since the image sensor according to the Fourth Preferred Embodiment changes the gain substantially by the reference range of the analogue-digital conversion circuit as is described above, the sensor controls the sensitivity and produces a digital signal with a small number of circuit components. Further, since the output is in digital format, connection with other digital equipment is easily established.

### Fifth Preferred Embodiment

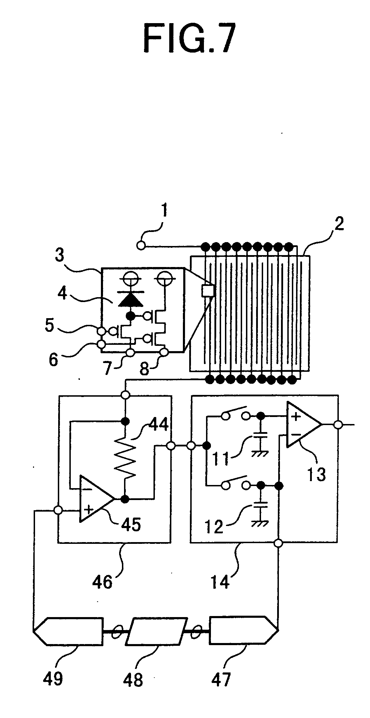

In the First to Fourth Preferred Embodiments, the reset drive is carried out every time the image sensor reads out the output of the solid state photosensing devices. Here, an example of the circuit that performs correction by the use of the reset signal stored in the memory will be described. In FIG. 7, a current-voltage conversion circuit 46 comprises a current sense resistance 44 and an analogue amplifier 45. The numeral 47 designates an analogue-digital conversion circuit, the numeral 48 designates a digital conversion circuit including a memory, and the numeral 49 designates a digital-analogue conversion circuit. The current-voltage conversion circuit 46 changes its gain according to a reference voltage (input on the plus side of the analogue amplifier 45). The reference voltage receives the output of the digital-analogue conversion circuit 49. Here, each pixels absorbs variations in sensitivity by controlling the reference voltage. The solid state photosensing device 3 produces an output current corresponding to the electric charges stored in the photodiode 4. The output current is converted into a voltage signal in the current-voltage conversion circuit 46 to be fed to the differential circuit 14.

When the image sensor reads out a signal of the solid state photosensing device 3 for the first time, the digital-analogue conversion circuit 49 fixes a level of output signal to a prescribed voltage. The output signal that is stored in the analogue memory for reset signals 12 at this time is read in the analogue-digital conversion circuit 47 and stored in the memory of the digital conversion circuit 48. From the second time on, the digital output stored in the memory of the digital conversion circuit 48 is used to determine the reference voltage.

In the Fifth embodiment, the output of the differential circuit 14 from the second time on exhibits the characteristics shown in FIG. 2C. In other words, the solid state photosensing devices are corrected to make an agreement in the saturation level. Since the image sensor of this preferred embodiment is constructed so as to change the gain by varying the potential of the reference voltage in the analogue amplifier, the sensitivity is controlled with a circuit of a simple construction. Further, utilizing the stored reset signal makes the speed of reading the signal quite high.

### Sixth Preferred Embodiment

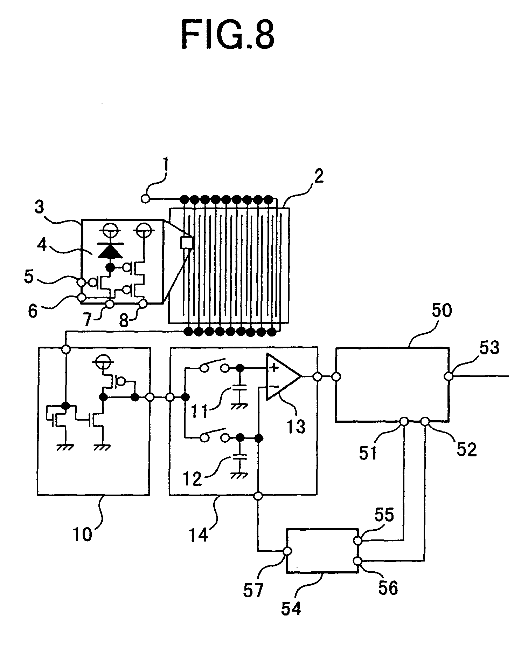

In the First to Fifth Preferred Embodiments, examples employ circuit components, for general purposes, having the linear input-output relationship. Now, an example employing a non-linear characteristics will be described. In FIG. 8, the numeral 50 designates a non-linear conversion circuit, the numeral 51 designates a first break point setting terminal of the non-linear conversion circuit 50, the numeral 52 designates a second break point setting terminal of the non-linear conversion circuit 50, the numeral 53 designates an output terminal of the non-linear conversion circuit 50, the numeral 54 designates a break point generation circuit, the numeral 55 designates a first break point output terminal of the break point generation circuit 54, the numeral 56 designates a second break point output terminal of the break point generation circuit 54, and the numeral 57 designates an input terminal of the break point generation circuit 54.

The analogue memory for reset signals 12 is connected to the input terminal 57 to control the break point generation circuit 54. The break point generation circuit 54 produce output signals of two levels from the first break point output terminal 55 and the second break point output terminal 56 respectively when one level of signal is fed to the input terminal 57. The non-linear conversion circuit 50 receives the two levels of signals and converts the input signal to produce an output on the output terminal 53 in such a manner that input/output relation is indicated by a non-linear broken line comprising three sections.

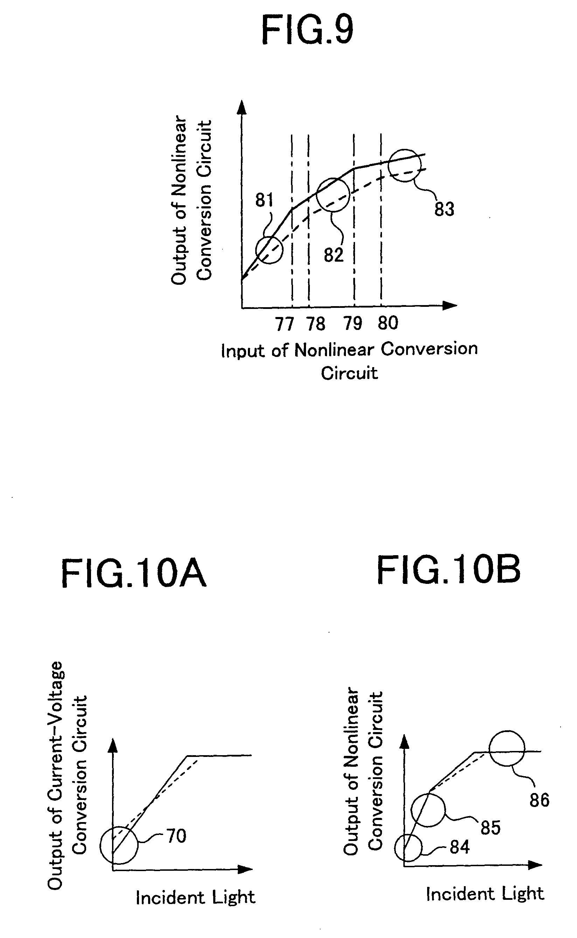

The input/output characteristics of the nonlinear conversion circuit 50 are shown in FIG. 9. In the same figure, a solid line and a dotted line represent the difference of the input/output characteristics depending on the setting values at each break point. The input/output characteristics are shown by a broken line constituted of three sections; a first section 81 of the broken line, a second section 82 of the broken line, and a third section 83 of the broken line. The numerals 77 and 79 designate the setting values at the first break point and the second break point of the broken line shown by a solid line. The numerals 78 and 80 designate the setting values at the first break point and the second break point of the broken line shown by a dotted line. The inclinations of the third section 83 of the broken lines are fixed in advance.

The solid state photosensing device 3 produce an output current corresponding to the electric charges stored in the photodiode 4. The output current is converted into a voltage signal at the current-voltage converting circuit 10, and stored in the analogue memory for signals 11 of the differential circuit 14 as a stored signal. Then, the reset drive is carried out to store the reset signal in the analogue memory for reset signals 12. The break point generation circuit 54 converts the reset signal properly and produces two variables of output (break point signals) from the first break point output terminal 55 and the second break point output terminal 56. The non-linear conversion circuit 50 converts the output signal of the differential circuit 14 into a non-linear break line comprising three sections and supplies the output on the output terminal 53.

Referring now to FIGS. 10A and 10B, the state in which variations in output attributable to the difference of the characteristics of the solid state photosensing device 3 is corrected will now be described. FIG. 10A is a graph showing the relation between the quantity of light incident on the photodiode 4 and the output current-voltage conversion circuit 10, wherein a solid line and a dotted line represent the output of the two solid state photosensing devices having different characteristics. FIG. 10B is a graph showing the relation between the quantity of light incident on the photodiode 4 and the output of the non-linear conversion circuit 50, wherein a solid line and a dotted line represent the difference of outputs attributable to the difference of characteristics of the solid state photosensing devices shown in FIG. 10A.

The non-linear conversion circuit corrects not only the gain, but also the saturation level. The image sensor, while having output signals of different reset levels and gains in the current-voltage conversion circuit 10 shown by the numeral 70, have output signals coincident in the reset level and the gain near the reset level as show by 84 and 85 after the correction in the non-linear conversion circuit 50. The saturation levels also agree with each other as shown by 86.

Since the image sensor of the Sixth Preferred Embodiment changes the gain by changing the functional shape of the non-linear conversion circuit having non-linear characteristics in input and output, the variations in sensitivity and saturation level of the signal attributable to the difference of the characteristics of the solid state photosensing device are easily corrected.

### Seventh Preferred Embodiment

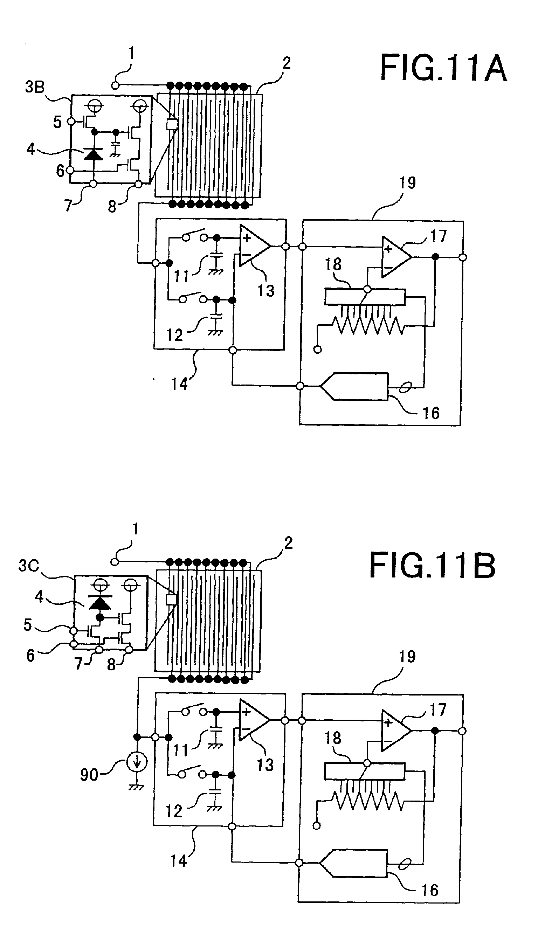

In the First to Sixth Preferred Embodiments, examples employ a solid state photosensing device of current-output type. The present invention may also be applied to the solid state photosensing device of voltage-output type. Examples of image sensors employing a solid state photosensing device of voltage-output type will be shown in FIGS. 11A and 11B on the basis of the image sensor shown in the First Preferred Embodiment.

The solid state photosensing devices of voltage-output type 3B/3C are shown in FIGS. 11A/11B. The operations thereof are the same as those of the solid state photosensing device of current-output type except that the output is produced in voltage. A bias current 90 is added in FIG.11B. The analogue memory for reset signals 12 is connected to the analogue-digital conversion circuit 16 to control the gain of the gain variable amplifier 19. Compared with the First Preferred Embodiment which employs a solid state photosensing device of current type, the Seventh Preferred Embodiment eliminates the need for the current-voltage conversion circuit 10 and then simplifies the construction of the image sensor. In the Second, Third, Fourth and Sixth Preferred Embodiments, the solid state photosensing device 3 of current-output type can be replaced with the solid state photosensing device of voltage-output type 3B or 3C.

### Eighth Preferred Embodiment

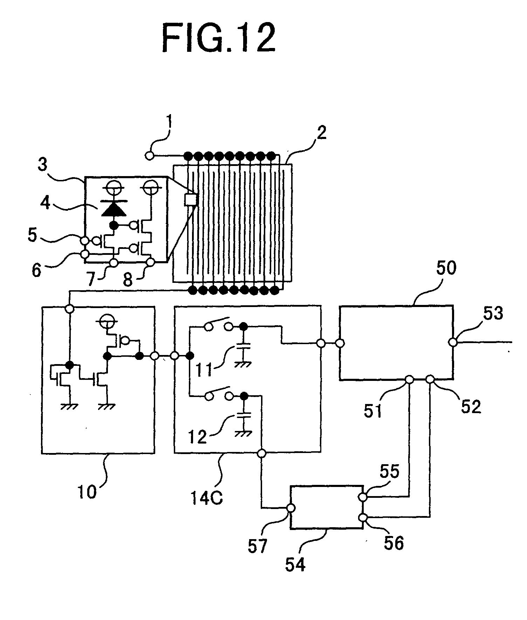

In the First to Seventh Preferred Embodiments, examples employ a CDS circuit in the differential circuit 14. An example of the image sensor constructed without using the differential circuit is shown in FIG. 12.

FIG. 12 differs from the Sixth Preferred Embodiment (FIG. 8) in that there is no differential amplifier 13 provided. The analogue memory for reset signals 12 is connected to the break point generation circuit 57 to control the gain of the non-linear conversion circuit 50. The effects are the same as those of the Sixth Preferred Embodiment.

### Ninth Preferred Embodiment

In the First to Eighth Preferred Embodiments, examples read the output of the solid state photosensing device successively and correct variations with one gain variable amplifying means. However, it is also possible to provide a plurality of gain variable amplifying means for one image sensor.

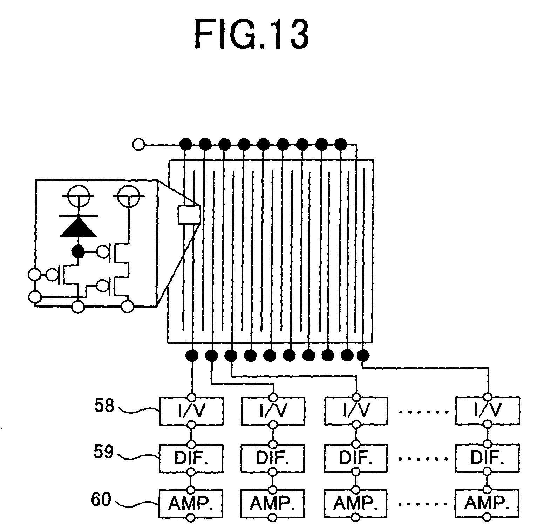

FIG. 13 shows an example of a circuit having the same number of amplifying means as the number of the columns. In FIG. 13, the numeral 58 designates a current-voltage conversion circuit, the numeral 59 designates a differential circuit, and the numeral 60 designates an amplifier. For example, the current-voltage conversion circuit 58 corresponds to the current-voltage conversion circuit 10, the differential circuit 59 corresponds to the differential circuit 14 and the amplifier corresponds to the gain variable amplifier circuits 19, 24,and 25. The concept to provide a plurality of gain variable amplifying means in an image sensor is also applicable to the Fourth to Eighth Preferred Embodiments, in forms somewhat different from that of the circuit shown in FIG. 13. Though this arrangement makes the construction complicated, the image sensor reads out the signal more quickly, and thus increases the speed of response. As the image sensor has more number of solid state photosensing devices for better resolution increasingly, the circuit construction of this preferred embodiment has an advantage.

## Claims

1. An image sensor comprising:
an image sensing portion having a plurality of solid state photosensing devices for converting light into an electric signal,
drive potential supply means for supplying a drive potential of the solid state photosensing devices,
amplifying means for receiving the electric signal and amplifying the electric signal with a variable gain, and
controlling means for controlling the gain of the amplifying means,
wherein the amplifying means changes the gain according to a reset signal produced by the solid state photosensing device in a state in which no light is substantially incident.

2. An image sensor as set forth in Claim 1, wherein the drive potential supply means supplies two switchable levels of drive potentials and the amplifying means changes the gain according to two different reset signals which are produced by the solid state photosensing devices on driving at the two levels of drive potentials.

3. An image sensor as set forth in Claim 1, wherein the amplifying means has a linear input-output relation.

4. An image sensor as set forth in Claim 2, wherein the amplifying means has a non-linear input-output relation.

5. An image sensor as set forth in Claim 1, wherein the amplifying means produces an output of the electric signal in digital format.

6. An image sensor as set forth in Claims 1, further comprising storing means for storing a reset signal produced by each of the solid state photosensing devices, wherein the amplifying means changes the gain according to the stored reset signal.

7. An image sensor as set forth in Claim 1, wherein the solid state photosensing devices produce an output of the electric signal in the non-linear relation with respect to the quantity of incident light.
